# EUROPEAN PATENT SPECIFICATION

(11) **EP 0 416 899 B1**
(45) Date of publication and mention of the grant of the patent: **03.11.1993**
(21) Application number: 90309724.4
(22) Date of filing: 05.09.1990
(51) Int. Cl.: B60J 10/00, E06B 7/22

(54) **Strip structure for automotive vehicles**
Streifenanordnung für Kraftfahrzeuge
Structure de bande pour véhicules

(30) Priority: 06.09.1989 US 403380
(43) Date of publication of application: 13.03.1991
(73) Proprietor: THE STANDARD PRODUCTS COMPANY, Cleveland Ohio 44102 (US)
(72) Inventor: Vaughan, Robert Albert, Dearborn, Michigan 48124 (US)
(74) Representative: Jones, Michael Raymond

(56) References cited:
- DE-A- 2 228 061
- GB-A- 1 341 997
- GB-A- 1 512 841
- GB-A- 2 172 640

## Description

This invention relates to strip structures which can be attached to flanges, and, more particularly, to weatherstrips for automotive vehicles.

Flange finisher strips are used in the automotive industry to mount weatherstrips to seal the edges of windows, doors, trunks, engine compartments or the like. Flange finisher strips are also used to cover flange edges for decorative and/or protective purposes. Generally, flange finishers are installed onto a flange during the assembly of the automotive vehicle and, hence, it is desirable that the flange finisher strip be easily installed. However, it is also generally intended that the installation be permanent; hence, it is also desirable that the flange finisher be highly resistant to removal from the flange.

Belt weatherstripping as well as other weatherstripping is well known in the automotive art. Belt weatherstripping may be used along the flange at the bottom of a movable window of an automotive vehicle to cover the flange, to seal the window and to improve the appearance of the vehicle. In this case, belt weatherstripping may have a show surface which is presented to view from the outside of the vehicle.

Although weatherstrips are known in the art, there remains a need for improved retention means to secure the weatherstrip onto the associated flange. In particular, there is a need for weatherstrips to have an improved tolerance to irregularities on or in the flange. Thus, it would be desirable in the case of belt weatherstripping, if the weatherstrip would present a consistent smooth outer show surface even when mounted on an irregular flange. It would also be desirable if the show surface of the belt weatherstrip were accurately and consistently positioned regardless of irregularities in the associated flange. It is desirable for the weatherstrip to be easily mounted or installed on the flange with relatively little force but, once mounted, to require substantial force to remove it.

In GB-A-2172640, there is disclosed a sealing strip in the form of a generally U-shaped body, in which each side wall is provided with at least one projection, at least one of which has in cross-section a neck region and an enlarged head region having an arcuate surface to abut the flange on which it is mounted. The arrangement is such that an attempt to remove the strip from the flange causes the projection to tend to roll into greater interference with the flange, thereby increasing resistance to the removal of the flange.

According to the present invention there is provided a generally channel-shaped strip structure for clamping retention on an edge flange, the strip structure comprising a core or reinforcement member having, in cross-section, a pair of legs and, between the legs, a radius or web portion defining with the legs a channel and further having an elastomeric cover bonded to the core or reinforcement member, the elastomeric cover including first retaining means extending inwardly from one of said legs for retaining the strip structure on the edge flange (Strip structure of the type disclosed e.g. in GB-A-2 172 640), characterised in that the other of said legs of the core or reinforcement member has, in cross-section, a re-entrently bent leg portion providing a free end portion extending into the channel with second elastomeric retaining means positioned on said free end portion in opposition to said edge flange for retaining the strip structure on said edge flange, wherein said radius or web portion serves as a first spring portion and said re-entrently bent leg portion serves as a second spring portion, the second spring portion being more easily deflectable than the first spring portion.

Preferably the second elastomeric retaining means comprises rolling lock members so shaped as to facilitate entry of the edge flange into the channel but to resist its removal.

Preferably the first retaining means comprises elastomeric projections or ribs.

The leg having the re-entrently bent leg portion preferably comprises a plurality of fingers with adjacent fingers being separated by a slot or gap.

The strip structure may include one or more sealing ribs or bulbous components for sealing.

For a better understanding of the present invention, and to show how the same may be carried into effect, reference will now be made, by way of example, to the accompanying drawings, in which:
Figure 1 is a side elevation of part of an automotive vehicle with an embodiment of a belt weatherstrip of the present invention assembled thereon;
Figure 2 is a cross-sectional view of an embodiment of a weatherstrip of the present invention, with an associated flange and window pane shown in broken lines;
Figure 3 is an enlarged view of the portion of Figure 2 within the circle shown in broken lines on Figure 2 and indicated by the numeral 3;
Figure 4 is a perspective view of a portion of a reinforcement member similar to that in the weatherstrip shown in Figure 2; and
Figure 5 is a cross-sectional view of another embodiment of a weatherstrip according to the present invention.

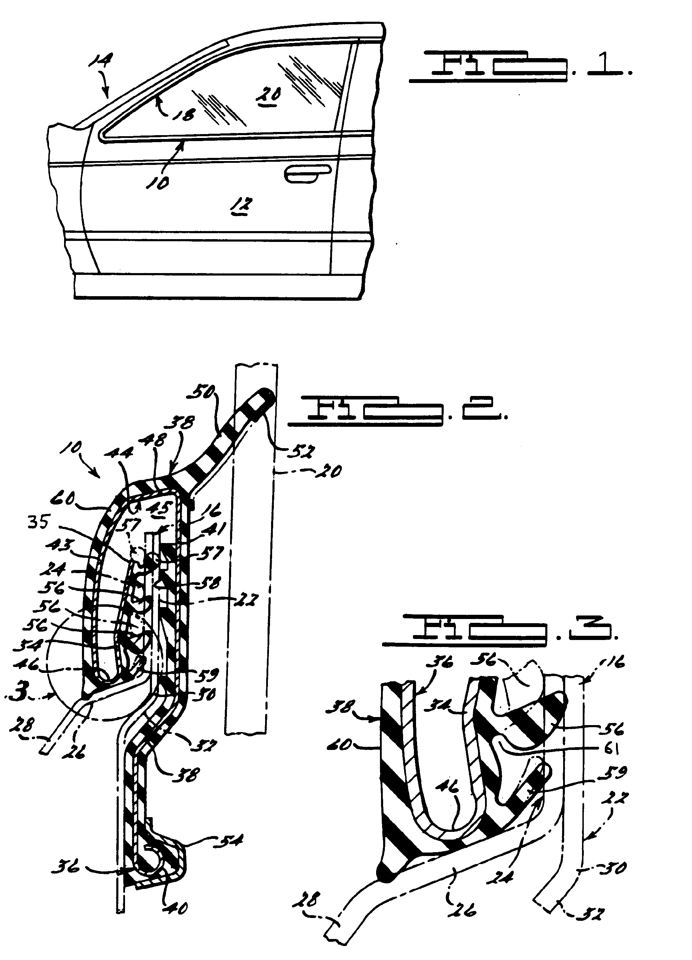

Referring first to Figures 1-3, a preferred embodiment of a belt weatherstrip of the present invention is shown and indicated generally by the numeral 10. The weatherstrip 10 is shown in Figure 1 installed on a door 12 of an automotive vehicle 14 along a door flange 16 which extends horizontally along the lower edge of a window opening 18 having a glass window pane 20 which is movable from a raised, closed position as shown in Figure 1 to a lowered, open position in a conventional manner.

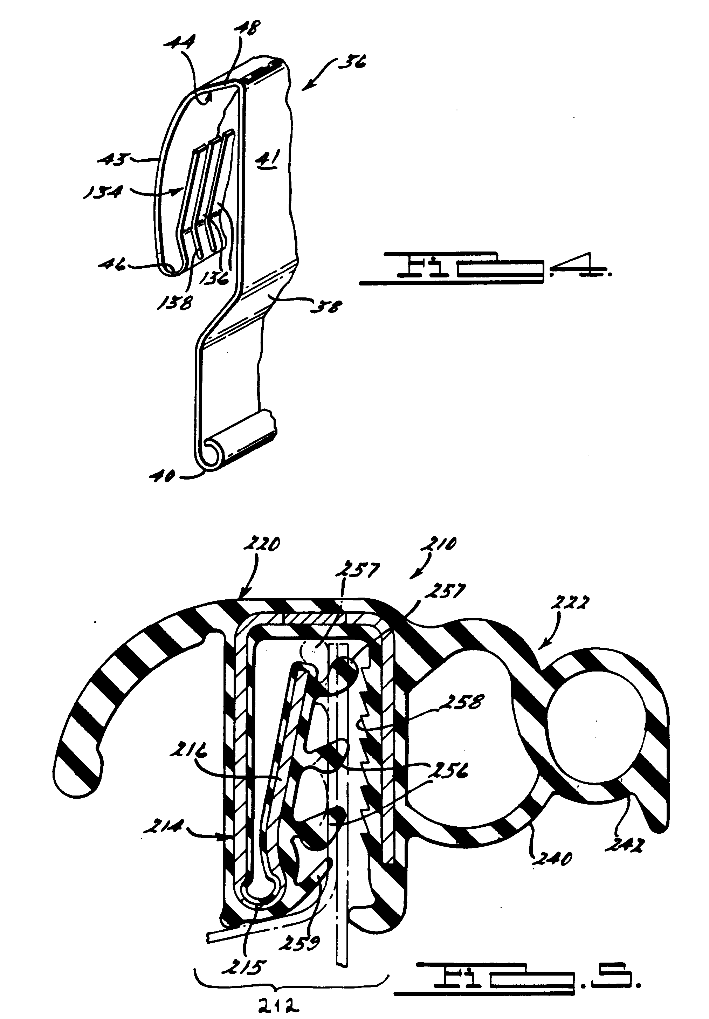

The weatherstrip 10 is securely mounted on the door flange 16 which has an inner metal sheet (or shut) 22 and an outer metal sheet (or shut) 24 joined and welded together as is conventional in the art. The outer metal sheet 24 is formed to extend outwardly as shown in Figure 2, to provide a shelf 26 with an outer face 28 extending downwardly therefrom. The inner metal sheet 22 also is formed to extend outwardly at 30 to provide a shoulder 32 for increased clearance of the glass pane 20 and mechanical retention of belt weatherstrip onto the flange 16.

The weatherstrip 10 is shown in detail in Figures 2 and 3. The weatherstrip 10 is an elongated member and is hook-shaped with a re-entrantly bent leg portion 34 in cross-section. The weatherstrip 10 has a substantial rigid metal core or reinforcement member 36 which carries and supports an elastomeric cover 38 surrounding a substantial portion of the core or member 36.

The core or member 36 may be formed by passing a metal strip through forming rolls to provide it with its hook-shape with the re-entrantly bent leg portion 34 in cross-section as shown in Figure 2. The core or member 36 has a shoulder portion 38 which cooperates with the shoulder 32 of the inner door metal sheet 22 to ensure retention of the belt weatherstrip 10 on the flange 16. The core or member 36 has a circular eyelet tail portion 40, in cross-section, to impart increased strength at the tail portion 40 of the weatherstrip 10. The core or member 36 includes a fish hook-shaped portion 44, in cross-section, with legs 41 and 43 spaced apart by a radius or web portion 48, a further radius or web portion 46, and the leg portion 34 extending therefrom. The interior of the fish hook portion 44 defines a channel 45 within which the re-entrantly bent leg portion 34 extends to aid in securing the weatherstrip to the flange 16.

The radius or web portion 46 is formed between the fish hook portion 44 and the leg portion 34 opposite to the leg 41. The radius or web portion 46 has a reduced thickness and reduced strength as compared to the hook radius or web portion 48. Thus, the radius or web portion 46 will bend or yield before the hook radius or web portion 48 between legs 41 and 43. The hook portion 44 with the radius or web portion 48, and the radius or web portion 46 with the leg portion 34 act as a dual or two stage spring. The first sping portion, i.e. the hook portion leg 43 with the radius or web portion 48, requires a larger force than the second spring portion, i.e. the radius or web portion 46 and the leg portion 34, to deflect; thus, the second spring portion, i.e. the radius or web portion 46 and the leg portion 34, deflects before the first spring portion, i.e. the hook portion leg 43 with the radius or web portion 48.

The core or reinforcement member 36 is largely covered by the elastomeric cover 38 which may comprise any suitable plastics or rubber material such as EPDM (ethylene propylene diene monomer), thermoplastic, thermosetting, PVC, TPE or other rubber-like or rubber material, extruded onto the core 36 as is conventional in the art. The elastomeric cover 38 has a glass sealing rib 50 with flocking 52 thereon to reduce friction when the glass pane 20 is raised or lowered. Also, flocking 54 is provided on the tail portion 40 to reduce friction when the glass pane 20 come into contact therewith.

The elastomeric cover 38 incudes a retention mechanism comprising rolling lock members 56 and projections or ribs 58. The rolling lock members 56 are positioned on the leg portion 34 and are opposed by the projections or ribs 58 positioned on the leg 41 of hook portion 44. The rolling lock members 56 and the projections or ribs 58 are shaped so as to enable easy insertion of the weatherstrip on to the flange 16 but to strongly resist the weatherstrip's removal therefrom. The resistance is enhanced by a further rolling lock member 57 which projects from the leg portion 34 and abuts the free end portion 35 of the leg portion 34 when the weatherstrip is secured onto the flange 16, as is shown in phantom in Figure 2.

The projections or ribs 58 opposing the rolling lock members 56 and 57 are positioned to oppose a space between the rolling lock members 56 and 57 as seen in Figure 2. This positioning aids in mounting the weatherstrip 10 which enables rocking motion of the strip 10 during installation.

A finger 59 extends from the leg portion 34 near the connection with the radius or web portion 46. The finger 59 serves to prevent the flange 16 from entering into a crevice 61 during installation of the strip onto the flange 16 as seen in Figure 3. The finger 59 guides the flange 16 between the rolling lock members 56 and 57 and the projections or ribs 58 to ensure proper securement of the weatherstrip onto the flange 16.

The elastomeric cover 38 has a show surface 60 which is exposed to the viewer. This show surface 60 can be the outer surface of the elastomeric cover, or alternatively a metallic film providing a metallic appearance or a coloured polymeric layer, which may be layered directly onto core 36 or over the elastomeric cover 38, may be added to provide an aestheticly pleasing appearance.

Figures 4 and 5 illustrate additional embodiments of the present invention. Those elements which are the same as those previously described will be designated with same reference numerals.

Figure 4 illustrates another embodiment of the core or reinforcement member 36 in accordance with the present invention. The core or reinforcement member 36 of Figure 4 in cross-section, includes the tail portion 40, the shoulder portion 38, the hook portion 44, the radius or web portions 46 and 48, and a re-entrantly bent leg portion 134. The re-entrantly bent leg portion 134 is formed by a plurality of fingers 136 extending from the radius or web portion 46. Adjacent fingers 136 are separated by a slot or gap 138. The fingers 136 provide a resilient spring action in the leg portion 134 to assist in securing the weatherstrip on the flange 16. The dual or two stage spring would include the previously described first spring portion, and the second spring portion is formed from the narrowed radius or web portion 46 and the leg portion 134. The fingers 136 enable the leg portion 134 to adapt to discontinuities and any irregular contours of the flange. The reinforcement member illustrated in Figure 4 may be equally substituted for the core or reinforcement member previously described.

Figure 5 illustrates another embodiment of the weatherstrip according to the present invention. The weatherstrip 210 illustrates a flange securement portion 212 including a core or reinforcement member 214 having, in cross-section, a U-shape with a re-entrantly bent leg portion 216 extending from a free end of the U inwardly into the channel defined by the U-shaped core or reinforcement member 214. The core or reinforcement U-shaped member 214 is covered with an elastomeric covering 220 like that described above. A sealing member 222 extends from one of the legs of the U-shaped core or reinforcement member 214 to seal a door or the like.

A radius or web portion 215 having a thickness less than the thickness of the U-shaped core or reinforcement member 214, like that previously described, is at the free end of the U between the leg portion 216 and U-shaped core or reinforcement member 214. The rolling members 256 and 257 and the projections or ribs 258 and the finger 259 are like those previously described for components 56, 57, 58 and 59 respectively.

The sealing member 222 includes a pair of bulbous members 240 and 242 to provide the door seal. Thus, the weatherstrip of the present invention may be provided on a door opening, trunk opening, engine compartment opening or the like for sealing one body member with respect to another.

## Claims

1. A generally channel-shaped strip structure (10) for clamping retention on an edge flange (16), the strip structure (10) comprising a core or reinforcement member (36) having, in cross-section, a pair of legs (41, 43) and, between the legs (41, 43), a radius or web portion (48) defining with the legs a channel (45) and further having an elastomeric cover (38) bonded to the core or reinforcement member (36), the elastomeric cover (38) including first retaining means extending inwardly from one of said legs (41) for retaining the strip structure (10) on the edge flange (16), characterised in that the other of said legs (43) of the core or reinforcement member (36) has, in cross-section , a re-entrently bent leg portion (34) providing a free end portion (35) extending into the channel (45) with second elastomeric retaining means positioned on said free end portion (35) in opposition to said edge flange (16) for retaining the strip structure (10) on said edge flange (16), wherein said radius or web portion (48) serves as a first spring portion and said re-entrently bent leg portion (34) serves as a second spring portion, the second spring portion being more easily deflectable than the first spring portion.

2. A strip structure (10) according to claim 1, wherein the second elastomeric retaining means comprises rolling lock members (56, 57) so shaped as to facilitate entry of said edge flange (16) into the channel (45) but to resist its removal.

3. A strip structure (10) according to claim 1 or 2, wherein said first retaining means comprises elastomeric projections or ribs (58).

4. A strip structure (10) according to any preceding claim, wherein said leg (43) comprises a plurality of fingers (136) with adjacent fingers being separated by a slot or gap (138).

5. A strip structure (10) according to any preceding claim, which includes one or more sealing ribs (50) or bulbous components (240, 242) for sealing.

## Patentansprüche

1. Allgemein kanalförmige Streifenanordnung (10) zur Klemmhalterung an einem Randflansch (16), wobei die Streifenanordnung (10) aufweist: einen Kern bzw. Versteifungsteil (36) mit - im Querschnitt - zwei Schenkeln (41,43) und zwischen den Schenkeln (41,43) einem Radius- bzw. Stegabschnitt (48), der mit den Schenkeln einen Kanal (45) bildet, und ferner einen elastischen Überzug (38), der mit dem Kern bzw. Versteifungsteil (36) haftend verbunden ist, wobei der elastomere Überzug (38) erste Haltemittel umfaßt, die sich von einem der Schenkel (41) nach innen erstrecken, um die Streifenanordnung (10) an dem Randflansch (16) zu halten, dadurch gekennzeichnet, daß der andere der Schenkel (43) des Kerns bzw. Versteifungsteils (36) - im Querschnitt - einen zurücklaufend umgebogenen Schenkelabschnitt (34) aufweist, der einen sich in den Kanal (45) erstreckenden freien Endabschnitt (35) bildet, wobei zweite elastomere Haltemittel an dem freien Endabschnitt (35) gegenüber dem Randflansch (16) angeordnet sind, um die Streifenanordnung (10) an dem Randflansch (16) zu halten, wobei der Radius- bzw. Stegabschnitt (48) als ein erster Federabschnitt dient und der zurücklaufend umgebogene Schenkelabschnitt (34) als ein zweiter Federabschnitt dient, von denen der zweite Federabschnitt leichter umbiegbar als der erste Federabschnitt ist.

2. Streifenanordnung (10) nach Anspruch 1, bei dem die zweiten elastomeren Haltemittel Rollverriegelungsteile (56, 57) aufweisen, die so geformt sind, daß sie den Eintritt des Randflansches (16) in den Kanal (45) erleichtern, jedoch seinem Austritt einen Widerstand entgegensetzen.

3. Streifenanordnung (10) nach Anspruch 1 oder 2, bei der die ersten Haltemittel elastomere Vorsprünge bzw. Rippen (58) aufweisen.

4. Streifenanordnung (10) nach einem der vorhergehenden Ansprüche, bei der der Schenkel (43) mehrere Finger (136) aufweist, wobei benachbarte Finger durch einen Schlitz bzw. Spalt (138) getrennt sind.

5. Streifenanordnung (10) nach einem der vorhergehenden Ansprüche, die eine oder mehrere Dichtrippen (50) oder bauchige Teile (240,242) zum Abdichten umfaßt.

## Revendications

1. Structure (10) de bande ayant la forme générale d'un canal pour serrage sur un rebord de côté (16), la structure de bande (10) comprenant une partie centrale ou élément de renforcement (36) ayant, en section transversale, une paire de branches (41, 43) et, entre les branches (41, 43), une partie à rayon ou voile (48) définissant avec les branches un canal (45) et ayant en outre une coiffe en élastomère (38) liée à la partie centrale ou élément de renforcement (36), la coiffe en élastomère (38) comportant un premier moyen de retenue s'étendant vers l'intérieur à partir de l'une desdites branches (41) pour maintenir la structure de bande (10) sur le rebord de côté (16), caractérisée en ce que l'autre desdites branches (43) de la partie centrale ou élément de renforcement (36) a, en section transversale, une partie de branche cambrée de manière rentrante (34) fournissant une extrémité libre (35) qui s'étend dans le canal (45) avec un second moyen de retenue en élastomère placé sur ladite extrémité libre (35) en opposition audit rebord de côté (16) pour maintenir la structure de bande (10) sur ledit rebord de côté (16), dans laquelle ladite partie à rayon ou voile (48) sert de première partie élastique et ladite partie à branche cambrée de façon rentrante (34) sert de seconde partie élastique, la seconde partie élastique pouvant dévier plus facilement que la première partie élastique.

2. Structure de bande (10) selon la revendication 1, dans laquelle le second moyen de retenue en élastomère comprend des éléments de blocage roulants (56, 57) façonnés de manière à faciliter l'entrée dudit rebord de côté(16) dans le canal (45) mais à résister à son enlèvement.

3. Structure de bande (10) selon la revendication 1 ou 2, dans laquelle ledit premier moyen de retenue comprend des saillies ou nervures en élastomère (58).

4. Structure de bande (10) selon l'une quelconque des revendications précédentes, dans laquelle ladite branche (43) comprend une multitude de doigts (136), des doigts adjacents étant séparés par une fente ou interstice (138).

5. Structure de bande (10) l'une quelconque des revendications précédentes, qui comprend une ou plusieurs nervures d'étanchéité (50) ou des composants bulbeux (240, 242) pour étanchéité.
